# EUROPEAN PATENT SPECIFICATION

(11) **EP 2 959 174 B1**
(45) Date of publication and mention of the grant of the patent: **20.06.2018**
(21) Application number: 14709363.7
(22) Date of filing: 25.02.2014
(51) Int. Cl.: F16B 7/04, F16B 2/10, F16B 1/00

(54) **CONNECTOR**
STECKVERBINDER
CONNECTEUR

(30) Priority: 25.02.2013 GB 201303240
(43) Date of publication of application: 30.12.2015
(73) Proprietor: Magloc IP Limited, Glossop, Derbyshire SK13 6LQ (GB)
(72) Inventor: GARLICK, Antony Bernard, Old Glossop Derbyshire SK13 7QA (GB)
(74) Representative: Baker, Thomas Edward
(86) International application number: PCT/GB2014/050555
(87) International publication number: WO 2014/128508

(56) References cited:
- EP-A1- 0 029 500
- WO-A2-2011/029583
- US-A- 4 667 379
- US-A- 5 309 609
- US-A1- 2007 231 059
- US-B1- 6 340 180

## Description

The present invention pertains generally to mechanical connectors. More specifically, the invention relates to a mechanical connector for the connection of two components, designed to enable single hand operation. In particular, the invention relates to a connector according to the preamble of claim 1 and to a method of assembling a connector according to the preamble of claim 13. Such a connector is known from US 4 667 379 A. Existing connectors rely on the interaction between at least two components. The alignment and engagement of these components usually requires a degree of dexterity and, unless one component is fixed, necessitates a two-handed operation to both align and engage the components correctly. This alignment often requires a level of dexterity and accuracy of orientation that may not be present due, for example, to the fatigue or the restricted movement of the operator. A further drawback of many current connection systems is the complexity of disconnection and a further drawback is the complexity of manufacture. This is manifested if the connector is to be suitable for withstanding forces such as from a dog on a lead where the forces required to be withstood mean the connector must have significant strength. The present invention overcomes such problems.
According to the present invention there is a connector as defined in claim 1. There are significant benefits associated with the present invention. One benefit is the capability of assembling such a connector due to the first and second body portions being arranged to retain the at least one clip therebetween. Accordingly, the clip can be positioned in communication with the first or second body portion and the other of the first or second body portion can be assembled thus retaining the clip therebetween and providing ease of assembly.
The female body is beneficially arranged to receive an element capable of being attracted by a magnet or even more beneficially including a magnet. The female body portion is arranged and configured to retain the element or magnet therein. It is beneficial that a magnet is provided in the female body. A receiving zone for the magnet is beneficially provided preferably formed by the first and second body portion. This allows ease of manufacture. A benefit of utilising a magnet is during connection to a male engaging member the magnet beneficially aligns the male engaging member. Furthermore, the magnet attracts the male engaging member which effectively draws the male engaging member into the receiving chamber and on the way causes radial movement of the at least one retaining clip outwardly as the male engaging member is drawn into the receiving chamber.

Beneficially magnetic attraction draws the male and female engaging members together. The force of the attraction is preferably sufficient to move the at least one retaining clip between the closed and opened configuration. Operation of the connector benefits a user significantly due to the automatic alignment of the male engaging element and the female body.

The at least one clip is beneficially arranged to move from the closed configuration to the opening configuration upon transfer of a male engaging member into the chamber. The at least one retaining clip is preferably at least partially moveable between a radially outwardly open configuration and a radially inwardly closed configuration.

The first and second body portions are preferably radially separable. This separation enables ease of assembly.

The first and second body portions preferably define an annular opening into the receiving chamber. It will be appreciated that this enables a male engaging element to locate into the female body at any rotational orientation, which is particularly beneficial in use.

The at least one retaining clip is beneficially rotationally moveable relative to the first and second body portion. The at least one clip is preferably pivotally retained between the first and second body portion. At least a portion of the at least one clip is preferably seated between the first and second body portion. The at least one retaining clip is preferably rotationally secured about an axis substantially perpendicular to the longitudinal axis of the female body. As such, the at least one retaining clip is preferably arranged such that a force can be applied generally perpendicular to the longitudinal length of the female body thus causing pivoting action to cause the clip to rotate from the closed to the open configuration.

The at least one retaining clip preferably comprises a longitudinal length extending between a first and second end and is pivotally retained at a location intermediate the first end and the second end. The at least one clip preferably comprises a first body engagement element for resisting movement in the longitudinal axis of the first body portion and a second body engagement element for resisting movement in the longitudinal axis of the second body portion. Preferably the first body engagement element and preferably the second body engagement element comprise a spigot for seating into a receiving portion in the first body portion and preferably second body portion respectively.

It will be appreciated that there are beneficially provided at least two and even more beneficially there are provided two clips. The clips are beneficially provided radially opposite each other on opposing sides of the female body portion. This aids in operation as a user can pinch the first and second clips between their finger and thumb for example to enable release of a male engaging member. Furthermore, positioning of the clips in this manner prevents unintentional release of a male engaging member from the female body.

The at least one retaining clip preferably comprises a retaining element arranged to retain a male engaging member in the receiving chamber in the closed configuration. The retaining element is beneficially moveable between the closed configuration and the open configuration. The retaining element beneficially comprises a retaining surface arranged to seat against a male engaging member and prevent withdrawal of a male engaging member from the receiving chamber. The retaining element beneficially moves generally radially outwardly (actually arcs but the movement is generally radially outwardly) and beneficially in a direction substantially perpendicular to the longitudinal axis of the female body.

The retaining surface beneficially substantially aligns in the same longitudinal axis with the axis about which the clip rotates. It is important that force applied to the male engaging member is then transferred through a substantially straight line in the longitudinal axis between the retaining element and the axis about which the clip rotates. This reduces any possibility of unintentional or accidental release of the male engaging member from the female body. In the event of offset of the axis about which the clip rotates and the surface of the retaining member through which force is applied there is a possibility of accidental release particularly if the male engaging member is rotating relative to the female body.

At least one clip is preferably arranged such that force applied to the retaining surface is in a longitudinal axis and this longitudinal axis beneficially intersects the axis about which the clip rotates.

A biasing means, preferably a spring, is provided to bias the at least one clip to the closed configuration, and preferably extends between a first and second clip. Accordingly, the biasing means beneficially ensures that a first and second clip are biased to the closed configuration. The biasing means preferably extends generally perpendicular to the longitudinal axis of the female body.

The connector beneficially further comprises at least one collar portion arranged to at least partially encase the first and second body portions. The at least one collar is preferably drawn over the first and second body portion in the longitudinal axis. The collar preferably comprises at least one, and preferably two, recesses or grooves in the longitudinal axis arranged to accommodate the at least one clip, and beneficially two clips, where each groove accommodates a clip. A second collar is beneficially provided again arranged to at least partially encase the first and second body portions and arranged to be drawn over the first and second body portions in the longitudinal axis but in the opposing direction to the first collar. The first and beneficially second collar are provided which effectively ensure that the first and second body portions cannot accidentally release from one another. The first and second body portions are preferably arranged to interlock, and preferably clip together, however, the first and preferably second collar ensure that accidental lateral disconnection of the first and second body portions is impossible. The first collar beneficially has an opening through which an eyelet or fixing portion of the connector passes. The second collar beneficially defines an opening to the receiving chamber, the opening preferably being defined by an annular rim.

The at least one clip beneficially comprises a contact portion for contacting the male engaging member wherein the contact portion preferably tapers inwardly enabling the at least one clip to be deflected radially outwardly on introduction of a male engaging member through the opening to the receiving chamber.
The connector preferably further includes a male engaging member. The male engaging member beneficially includes a portion capable of being attracted by a magnet or else in one embodiment includes a magnet. It is beneficial that a portion capable of being attracted by a magnet is included in the male engaging member and the female body includes a magnet therein. The magnet is beneficially sufficiently strong such that as the male engaging member is brought into the vicinity of the female body, the magnet in the female body draws the male engaging member into the receiving chamber and accordingly deflects the at least one clip from the closed to the open configuration.
The male engaging member preferably comprises a head and a body portion separated by an axial groove. A clip contact surface is defined by a rearward surface of a head, preferably arranged to seat against the retaining surface of the retaining element. The clip contact surface is beneficially annular. The head beneficially projects from the body. The head beneficially tapers inwardly towards the tip.
Also according to the present invention there is a method of assembling a connector as defined in claim 13. The present invention will now be described by way of example only with reference to the accompanying drawings in which:
Figures 1 to 6 show schematic perspective views of the components and assembly process of a connector according to an exemplary embodiment of the present invention.
Figure 7 shows a schematic perspective view of an assembled connector according to an exemplary embodiment of the present invention.
Figure 8 shows a schematic perspective view of the components of assembly of the male engaging member for use in an exemplary embodiment of the present invention.
Figure 9 shows a schematic assembled perspective view of a male engaging member according to an exemplary embodiment of the present invention.
Figure 10 shows a schematic perspective view of the joining of a male engaging member with a female engaging member according to an exemplary embodiment of the present invention.
Figures 11 to 16 show insertion and subsequent removal of the male engaging member into a female body according to exemplary embodiments of the present invention in section view which clearly identify the component parts of the connector.

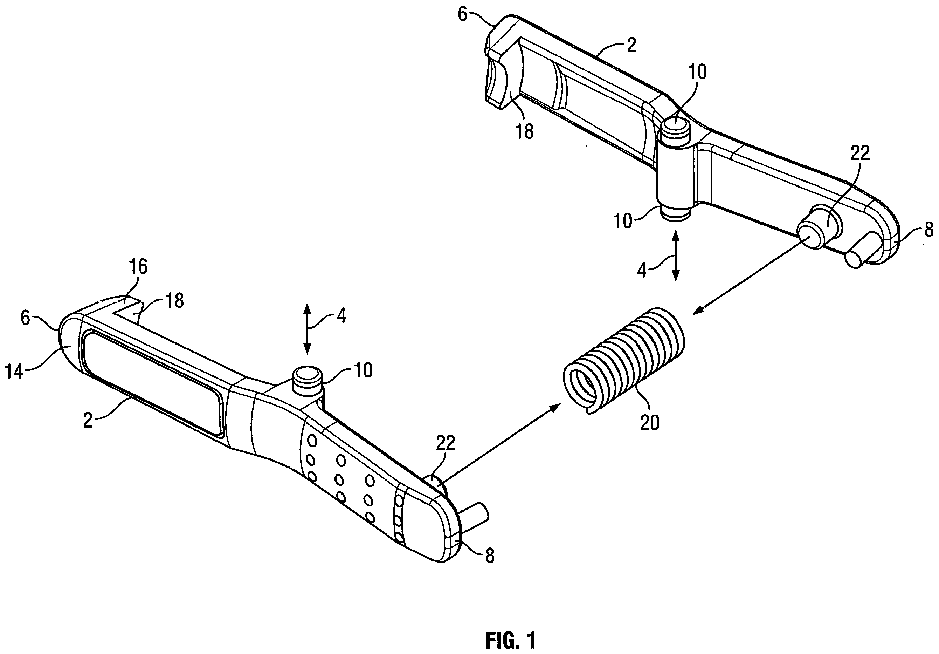

Referring to Figure 1, there is shown two opposing clips 2 for retaining a male engaging member in the receiving chamber of a female body. The clips 2 are elongate and are rotatable about the vertical axis identified by reference numeral 4. The clips have a first end 6 and second end 8. The clips 2 comprise a first body engagement element 10 which is arranged to resist movement in the longitudinal axis of the female body. The first body engagement element in one embodiment beneficially comprises a spigot 10 which is arranged to seat into a corresponding recess 12 in the body portion of the connector. There is provided a first and second connector body engagement element 10 extending in opposing directions which seat in recesses 12 which allow rotational movement of the clip 2 about the spigot 10. It will be appreciated that in an alternative embodiment the clip 2 may comprise an opening or receiving portion for receipt of a spigot provided in the body portion.

The clip 2 comprises a head 14 which comprises a retaining element 16 which beneficially tapers radially inwardly on an outwardly projecting surface which is shaped in this manner such that on insertion of a male engaging element, the male engagement element has a correspondingly shaped contact surface which communicates with the tapered surface of the head 14 and causes radial outward deflection of the clips. This is due to the male engaging element effectively opening the clips, beneficially due to the attraction of the magnet, drawing the head 14 into the receiving chamber. The retaining element 16 further comprises a retaining surface 18 which effectively forms a shoulder which cooperates in the closed configuration with a shoulder provided on the male engaging element.

A biasing means identified by a spring 20 in Figure 1 locates between first and second clips 2 and seats onto a spigot 22. This has the effect of pushing the clip 2 to the closed configuration.

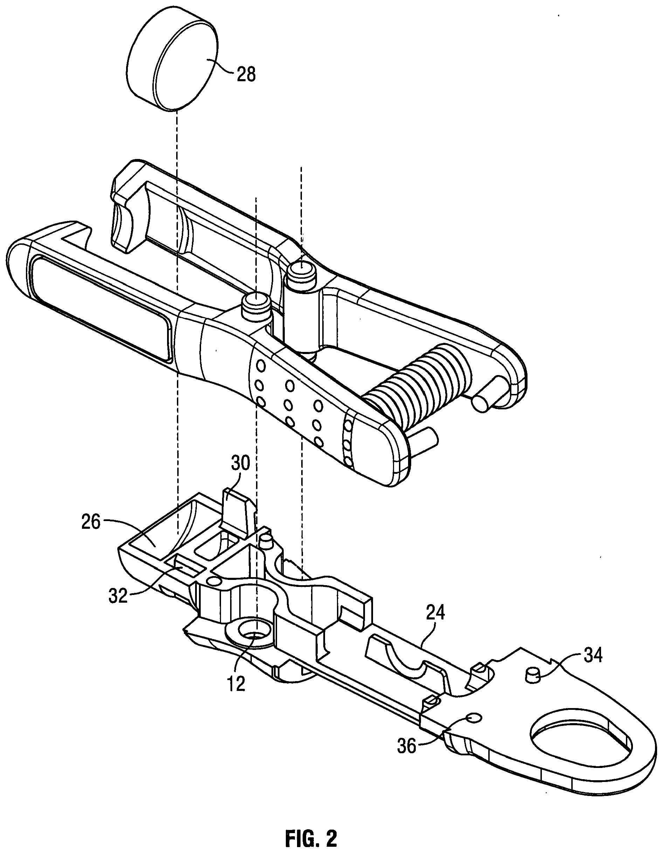

Referring to Figure 2, once the spring 20 is positioned between the first and second clips 2 the spigots 10 are seated into corresponding recesses 12 provided in a first body portion of the female body. It will however be appreciated that at least one clip 2 can be seated into the recess 12 prior to positioning of the spring 20. A cavity or receiving area is provided in the first body portion 24 identified by reference numeral 26 into which a cylindrical magnet 28 is seated. A clip 30 is provided on the first body portion 24 arranged to locate into the corresponding opening into the second body portion. A further cavity or opening 32 is provided in the first body portion 24 for receipt of a corresponding clip provided by the second body portion in order to secure the first body portion to the second body portion. Furthermore, a spigot 34 and opening 36 are provided on the first body portion 24 arranged to communicate with the second body portion to ensure alignment and connection therebetween.

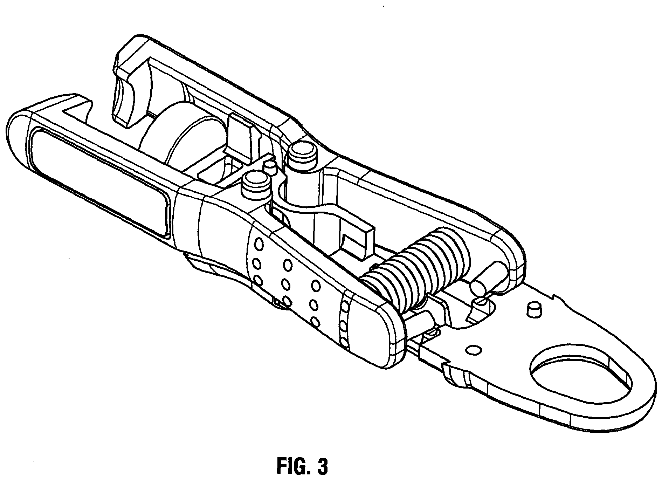

Figure 3 shows the assembly of the components identified in Figure 2.

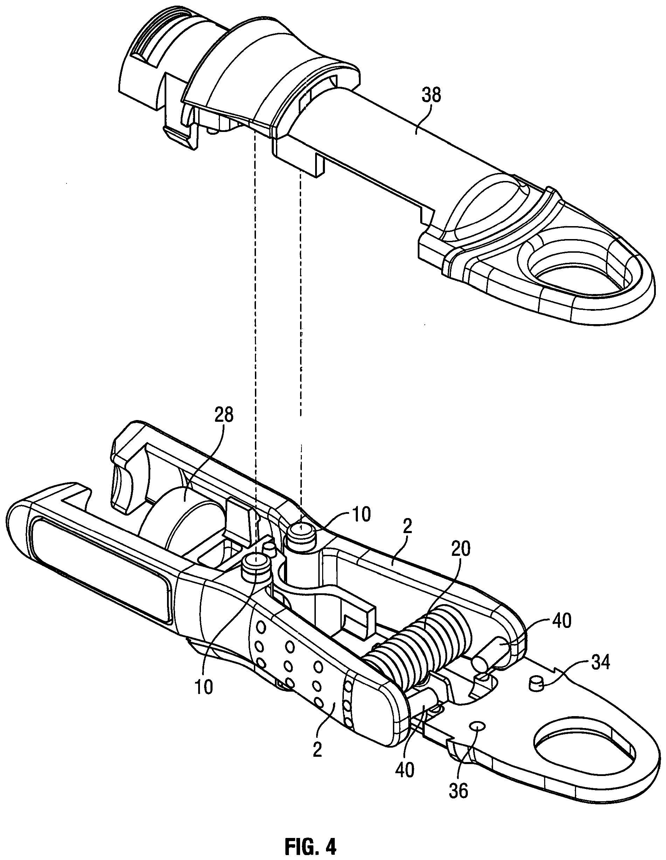

Figure 4 shows the relative positioning of the second body portion 38 as it secures to the first body portion 24 via clip 30 and cavity 32, spigot 34 and opening 36 and where the second body portion 38 and its recesses provided therein seat onto spigots 10. It will also be appreciated with respect to Figure 4 that projections 40 are provided generally opposing one another such that as the clips 2 are pushed towards one another against the spring 20, these projections 40 limit movement inwardly as they come into contact with one another thus preventing further inward compression.

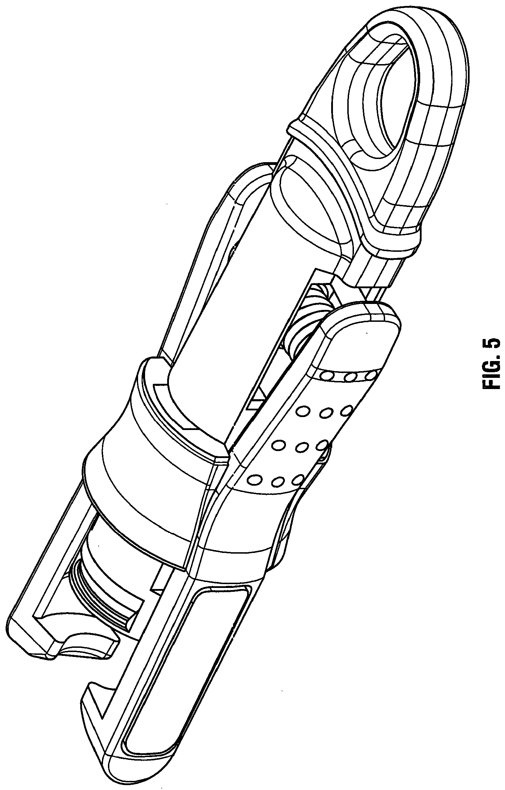

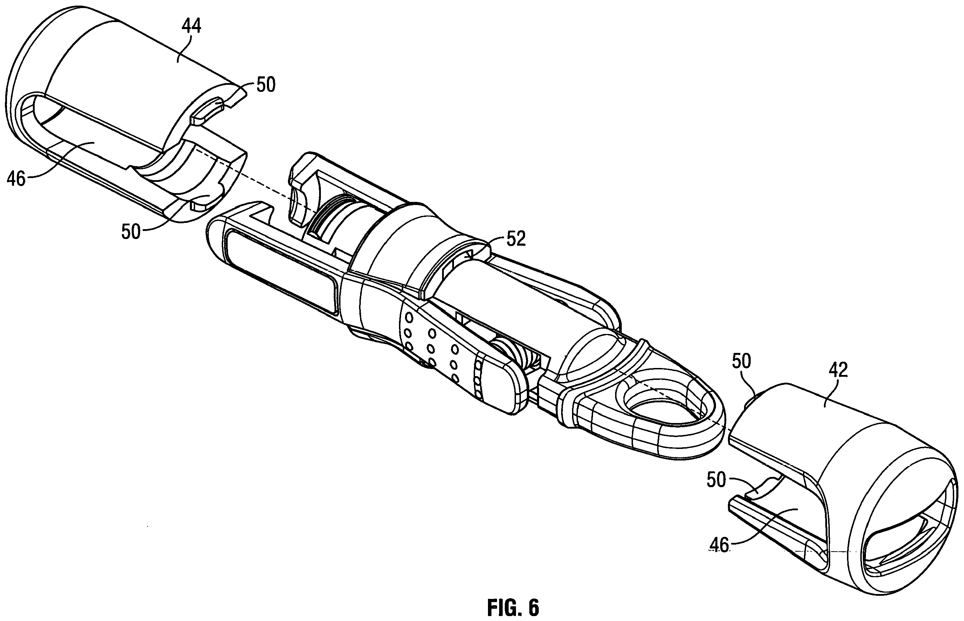

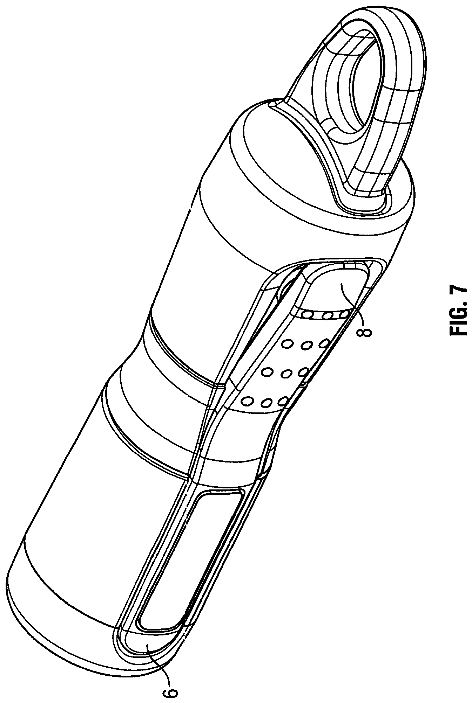

Figure 5 shows the second body portion secured to the first body portion and clips 2 and Figure 6 shows first and second collars 42,44 wherein the first collar 42 comprises grooves 46 therein to accommodate second end 8 of the clip 2. The second collar 44 also comprises a groove or channel to receive the first end of the clip 6. The first and second collars 42, 44 secure to the first and second body portions 24, 38. The first collar 42 comprises an opening through which a connection point projects which connects to, for example, the lead for a dog. Securing is achieved via clips 50 and corresponding openings provided in the first and second body portions 24,38 respectively, identified by reference numeral 52. In this configuration as identified in Figure 7, the connector is fully assembled and the clips 2 are effectively retained whereby compression of the clip 2 at the second end 8 radially inwardly causes compression of the spring 20, rotation of the clip 2 about the spigot 10 and causes corresponding deflection of the first end set radially outwardly allowing the connector to be in the release configuration.

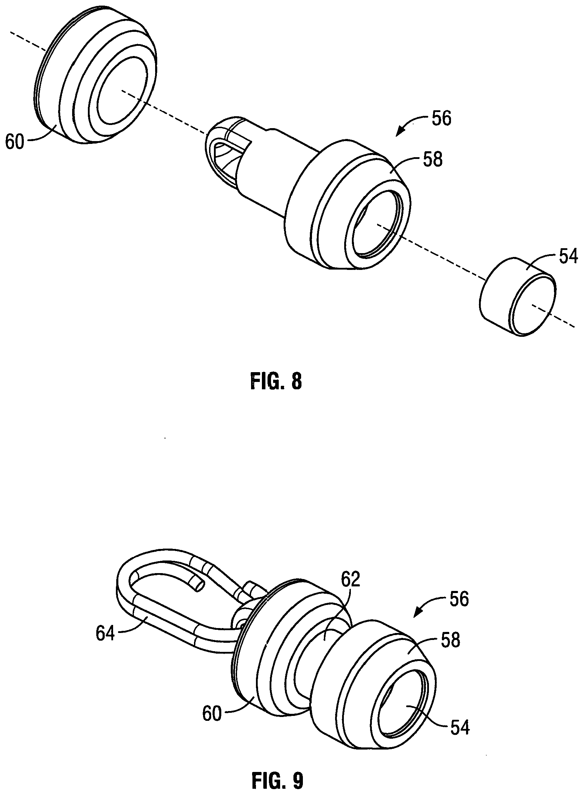

Referring now to Figures 8 and 9, the male engaging portion is shown. The male engaging portion includes an element capable of being attracted by a magnet which is beneficially in the form of cylindrical element 54. This cylindrical element is received in a head 56 and seats against a rim. The head 56 has a tapering outward clip contact surface 58 which tapers towards the tip of the male engaging element. A collar portion 60 is further provided which seats near the head 56 and between the collar 60 and head 56, is defined as axial groove 62 into which the retaining element 16 is arranged to seat in the closed configuration. The tapered surface 58 is tapered to generally correspond to the taper provided on the outwardly facing tapered surface of the retaining element 16. This is such that as the magnet 28 attracts the cylindrical element 54 the male engaging member is drawn into the opening provided in the connector and forces the first end 6 of the retaining clip 2 radially outwardly.

The arrangement of the male engaging element as shown in Figures 8 and 9 enables simple forming in plastic. An end loop 64 is provided which is simple to connect to the ring on a dog's collar for example. The male engaging element is beneficially made from glass-filled nylon for superior strength, however, the collar portion 60 which does not support any load in use is made of standard nylon which reduces cost.

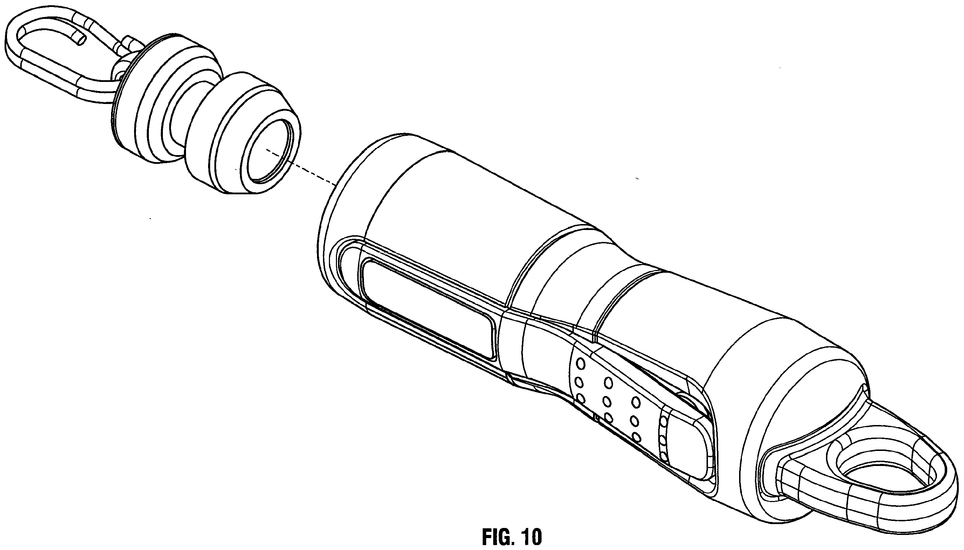

Figure 10 is a schematic perspective view of the male engaging element in the direction to be received by the connector. Referring to Figure 10 in some detail, the male engaging element is shown in alignment with the female body. It will be appreciated that in use this is unlikely and the description will now be made with reference to an embodiment wherein the connector is used for a dog collar. The male engaging element is attached to a ring on a dog collar by a generally oval end loop 64 which is shaped as such to allow maximum alternative orienting of the male engaging element with respect to the collar to which it is secured. This male engaging element then hangs from a dogs collar thus weight is extremely important as a reduction in weight minimises any impedance to the dog. When connection is required, a user grasps the female body and brings the female body into the vicinity of the male engaging element. The male engaging element has compliance meaning that it has significant freedom of movement to allow the head 56 to locate into the female body. Force of attraction from a magnet provided in the female body causes the alignment of the male engaging element even if the female body is not accurately aligned with the longitudinal axis of the male engaging element. Furthermore, the tapered surface of the clip contact surface 58 beneficially aids an engagement of the male engaging element with the female body and in particular allows initial engagement with the collar 44 and additional attraction by the magnet then draws the male engaging element into alignment in the longitudinal axis. Accordingly, one-handed connection of the female body to the male engaging element is achieved.

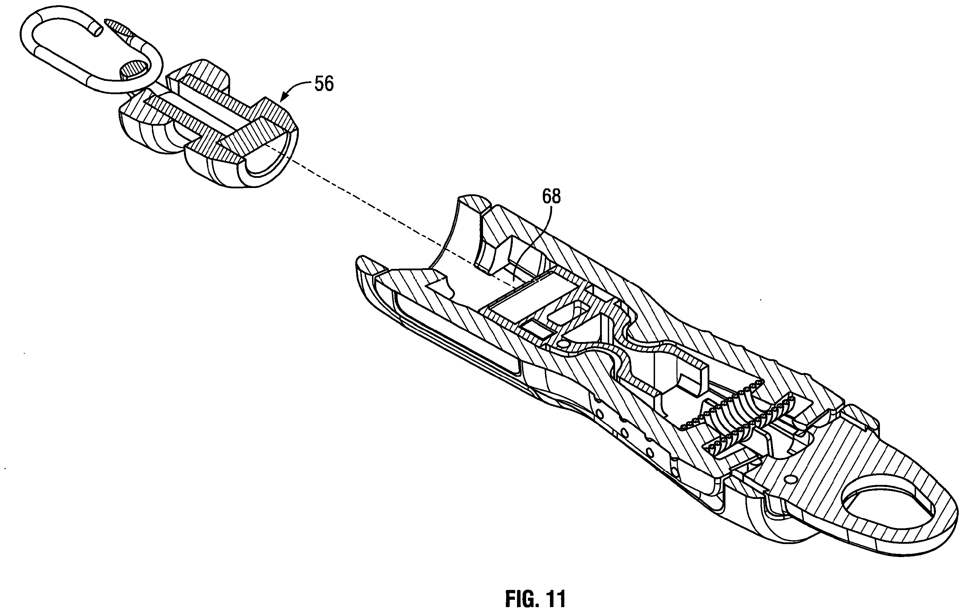

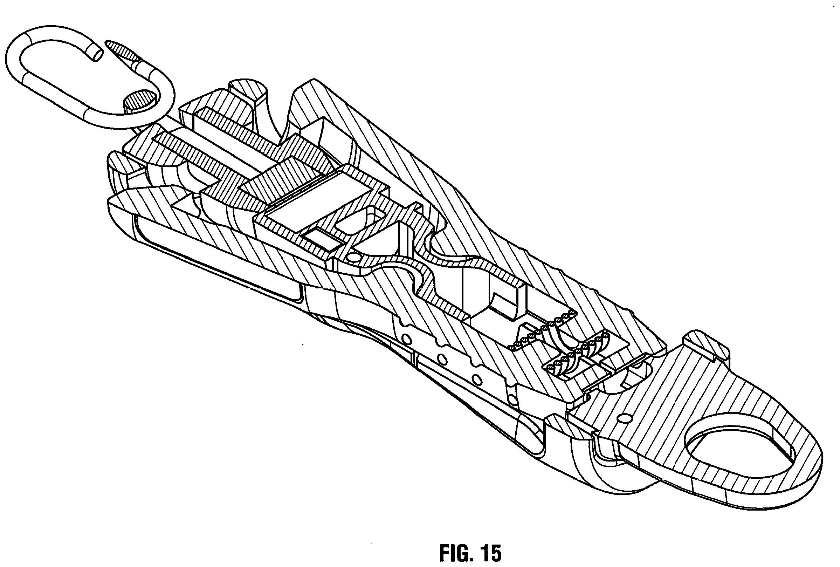

Referring to Figures 11 to 16, a perspective cross-sectional view of the female body and male engagement element are shown during the steps of connection and subsequent release.

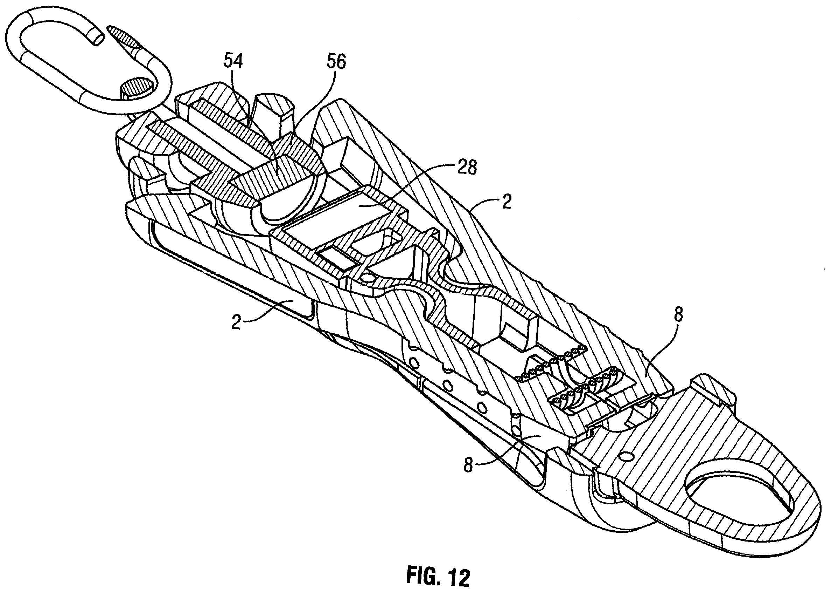

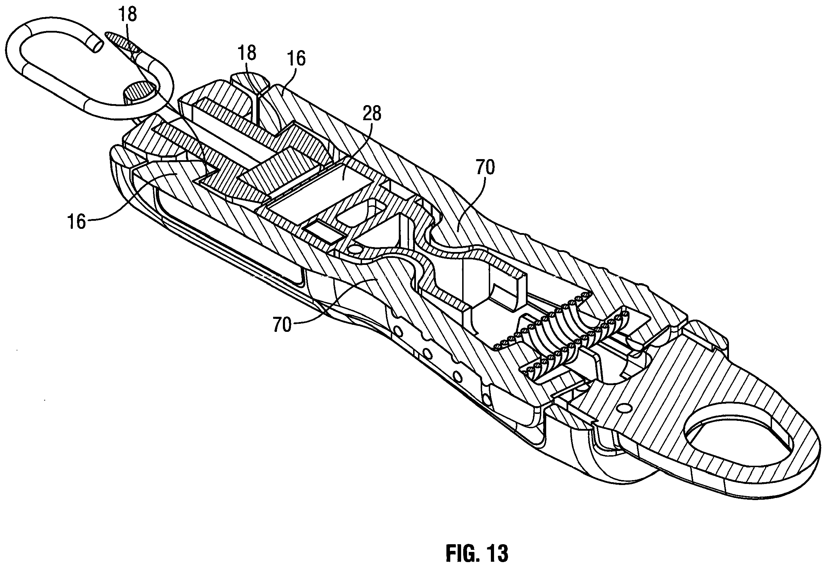

Referring to Figures 11 and 12, as the male engaging element comes into communication with the clips 2, the clips are forced radially outwardly thus allowing the head 56 of the male engaging element to be received in the receiving chamber 68. The magnet 28 causes attraction of the cylindrical element 54 and thus for the purposes of connection there is no requirement for compression of the second end 8 by a user. Once fully inserted as shown in Figure 13, the clips 2 return to the at rest configuration which is the closed configuration and the retaining element 16 prevents movement of the male engaging element in the longitudinal axis relative to the connector. The magnet 28 also acts to prevent relative movement in the longitudinal axis but rotational movement between the male engaging element and the female body is allowed. It will be appreciated that with reference particularly to Figure 13, the force provided on the male engaging element is pulled through the retaining element 16 and directly through the retaining surface 18. It will further be appreciated that this force is directly in line with the longitudinal axis through which the clips rotate identified by reference numeral 70. This is important as force applied to the male engaging element in the axial direction combined with a rotational force or twisting of the male engaging element will not force the clips apart and in particular force the retaining element 16 apart causing accidental release.

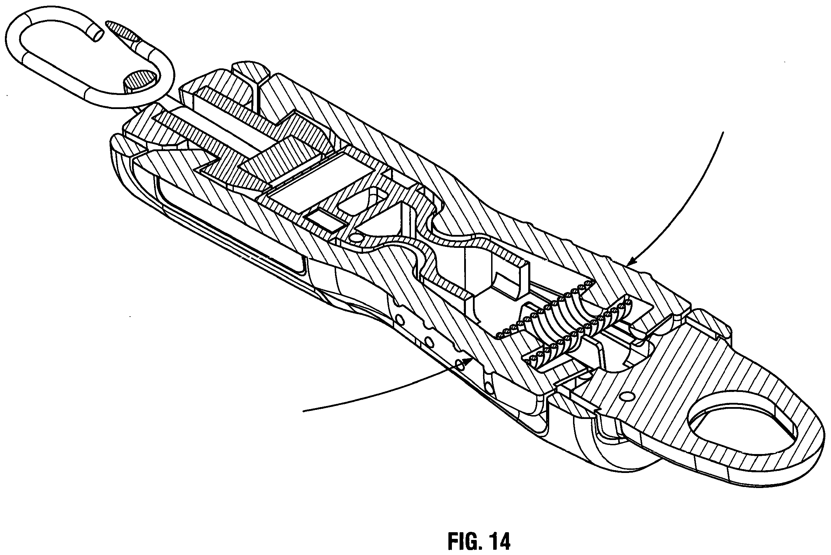

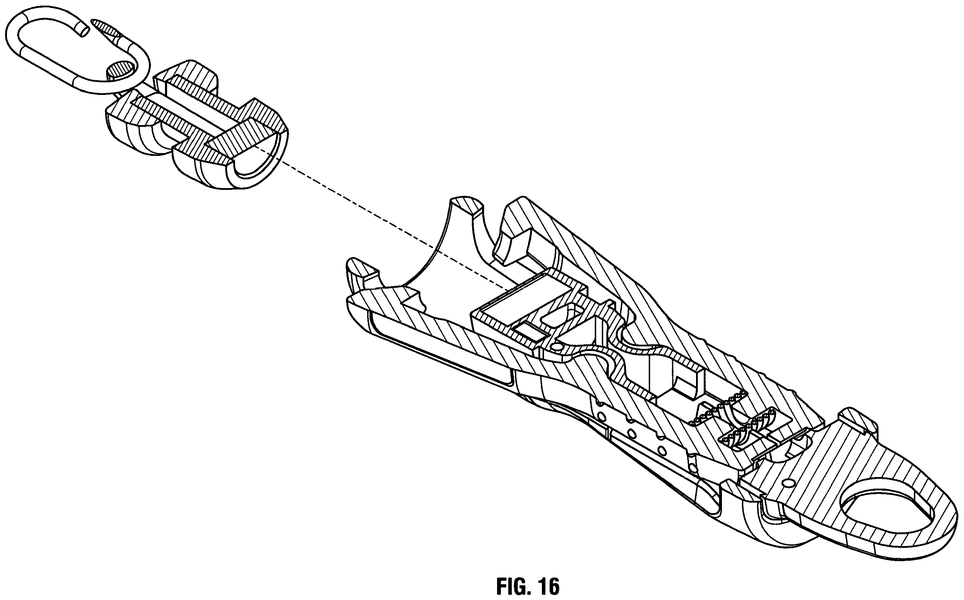

As identified in Figure 14, when release is required force is applied by a user pinching the clips 2 in the direction identified by the arrows. This causes release of the retaining elements 16 from retaining the head of the male engaging element 56 from the axial groove 62 meaning that the male engaging element can be released as identified in Figure 16.

The present invention has been described by way of example only and it will be appreciated by the skilled addressee that modifications and variations may be made without departing from the scope of protection afforded by the appended claims.

## Claims

1. A connector comprising:
- a female body having a longitudinal axis comprising a first body portion (24) and a second body portion (38) arranged to communicate to define a receiving chamber (68) for receipt of a male engaging member (56);
- at least one retaining clip (2) for retaining a male engaging member (56) in the receiving chamber (68), the at least one retaining clip (2) being moveable between an open configuration for receipt of a male engaging member (56) and a closed configuration for restraining movement of a male engaging member (56) in the longitudinal axis;
wherein the first (24) and second body (38) portions are arranged to pivotally retain the at least one retaining clip (2) therebetween, **characterised in that** the at least one clip (2) comprises a first body engagement element (10) or recess (12) for rotatably mounting to the other of a corresponding recess or body engagement element in the first body portion (24) for resisting movement in the longitudinal axis of the first body portion (24) and a second body engagement element or recess for rotatably mounting to the other of a corresponding recess or body engagement element for resisting movement in the longitudinal axis of the second body portion (38).

2. A connector according to claim 1, wherein the female body is arranged to receive an element (56) capable of being attracted by a magnet, and preferably wherein the female body includes a magnet (28);
and preferably wherein the female body is further arranged and configured to retain the element or magnet (28) therein;
and preferably further wherein the female body comprises a receiving zone (26) for the magnet (28) formed by the first (24) and second (38) body portion.

3. A connector according to any preceding claim wherein the at least one retaining clip (2) is arranged to move from the closed configuration to the open configuration upon transfer of a male engaging member (56) into the chamber (68); and/or
wherein the at least one retaining clip (2) is at least partially moveable between a radially outwardly open configuration and a radially inwardly closed configuration; and/or wherein the first (24) and second (38) body portions are radially separable; and/or wherein the first (24) and second (38) body portions define an annular opening into the receiving chamber (68).

4. A connector according to claim 1, wherein the at least one clip (2) is pivotally secured about an axis (4) substantially perpendicular to the longitudinal axis of the female body.

5. A connector according to claim 1 wherein the at least one clip (2) comprises a longitudinal length extending between a first (6) and second (8) end and is pivotally retained at a location intermediate the first end and the second end.

6. A connector according to claim 1, wherein the first body engagement element (10) and the second body engagement element each comprise a spigot (10) for seating into a receiving portion in the first body portion (24), and second body portion (38) respectively.

7. A connector according to any preceding claim, comprising two retaining clips (2), the two clips being provided radially opposite each other on opposing sides of the female body portion.

8. A connector according to any preceding claim, wherein the at least one retaining clip (2) comprises a retaining element (16) arranged to retain a male engaging member (56) in the receiving chamber (68) in the closed configuration.

9. A connector according to claim 7, wherein the retaining element comprises a retaining surface (18) arranged to seat against a male engaging member (56) and prevent withdrawal of a male engaging member (56) from the receiving chamber (68); and preferably wherein
the retaining surface (18) substantially aligns in the same longitudinal axis (4) with the axis about which the clip (2) rotates;
wherein the at least one clip (2) is arranged such that force applied to the retaining surface (18) is in a longitudinal axis (4) and this longitudinal axis beneficially intersects the axis about which the clip (2) rotates.

10. A connector according to any preceding claim, further comprising a biasing means (20), to bias the at least one clip (2) to the closed configuration; and/or
wherein the biasing means (20) extends between a first and second clip (2); and/or further comprising at least one collar portion (42, 46) arranged to at least partially encase the first (24) and second (38) body portions; and/or
wherein the retaining clip (2) comprises a contact portion for contacting the male engaging member (56) wherein the contact portion tapers inwardly enabling the at least one clip (2) to be deflected radially outwardly on introduction of a male engaging member (56) through the opening to the receiving chamber (68).

11. A connector according to any preceding claim, further comprising a male engaging member (56).

12. A connector according to claim 11, wherein the male engaging member (56) comprises a head and a body portion separated by an axial groove (62).

13. A method of assembling a connector comprising the steps of:
- providing a first body portion (24) and a second body portion (38) configured together to form a female body defining a receiving chamber (68) for receipt of a male engaging member (56), the female body having a longitudinal axis;
- providing at least one retaining clip (2),
- positioning the retaining clip (2) between the first body portion (24) and second body portion (38) such that the first body portion (24) and second body portion (38) retain the retaining clip (2) therebetween, the at least one retaining clip (2) being arranged to retain a male engaging member (56) in the receiving chamber (68), the at least one retaining clip (2) being moveable between an open configuration for receipt of a male engaging member (56) and a closed configuration for restraining movement of a male engaging member (56) in the longitudinal axis, **characterised in that** the at least one clip (2) comprises a first body engagement element (10) or recess (12) for rotatably mounting to the other of a corresponding recess of body engagement element in the first body portion (24) for resisting movement in the longitudinal axis of the first body portion (24) and a second body engagement element or recess for rotatably mounting to the other of a corresponding recess or body engagement element for resisting movement in the longitudinal axis of the second body portion (38), and positioning the retaining clip (2) between the first body portion (24) and second body portion (38) by locating respective recesses or body engagement elements of the clip with respective other of recesses or body engagement elements of the first and second body portions (24, 38).

## Patentansprüche

1. Steckverbinder, der Folgendes umfasst:
- einen Buchsenkörper, der eine Längsachse hat, wobei er einen ersten Körperabschnitt (24) und einen zweiten Körperabschnitt (38) umfasst, die dafür angeordnet sind, sich zu verbinden, um eine Aufnahmekammer (68) zur Aufnahme eines Steckereingriffselements (56) zu definieren,
- wenigstens eine Halteklammer (2) zum Festhalten eines Steckereingriffselements (56) in der Aufnahmekammer (68), wobei die wenigstens eine Halteklammer (2) beweglich ist zwischen einer offenen Konfiguration zum Aufnehmen eines Steckereingriffselements (56) und einer geschlossenen Konfiguration zum Einschränken einer Bewegung eines Steckereingriffselements (56) in der Längsachse,
wobei der erste (24) und der zweite (38) Körperabschnitt dafür angeordnet sind, die wenigstens eine Halteklammer (2) zwischen denselben festzuhalten, **dadurch gekennzeichnet, dass** die wenigstens eine Klammer (2) ein erstes Körpereingriffselement (10) oder eine Aussparung (12) zum drehbaren Anbringen an dem anderen von einer/einem entsprechenden Aussparung oder Körpereingriffselement in dem ersten Körperabschnitt (24), um einer Bewegung in der Längsachse des ersten Körperabschnitts (24) zu widerstehen, und ein zweites Körpereingriffselement oder eine Aussparung zum drehbaren Anbringen an dem anderen von einer/einem entsprechenden Aussparung oder Körpereingriffselement, um einer Bewegung in der Längsachse des zweiten Körperabschnitts (38) zu widerstehen, umfasst.

2. Steckverbinder nach Anspruch 1, wobei der Buchsenkörper dafür angeordnet ist, ein Element (56) aufzunehmen, das dazu in der Lage ist, durch einen Magneten angezogen zu werden, und vorzugsweise wobei der Buchsenkörper einen Magneten (28) einschließt,
und vorzugsweise wobei der Buchsenkörper ferner dafür angeordnet und konfiguriert ist, das Element oder den Magneten (28) in demselben aufzunehmen,
und vorzugsweise wobei der Buchsenkörper eine Aufnahmezone (26) für den Magneten (28) umfasst, die durch den ersten (24) und den zweiten (38) Körperabschnitt gebildet wird.

3. Steckverbinder nach einem der vorhergehenden Ansprüche, wobei die wenigstens eine Halteklammer (2) dafür angeordnet ist, sich auf eine Versetzung eines Steckereingriffselements (56) in die Kammer (68) hin von der geschlossenen Konfiguration zu der offenen Konfiguration zu bewegen, und/oder
wobei die wenigstens eine Halteklammer (2) wenigstens teilweise zwischen einer in Radialrichtung äußeren offenen Konfiguration und einer in Radialrichtung inneren geschlossenen Konfiguration beweglich ist,
und/oder wobei der erste (24) und der zweite (38) Körperabschnitt in Radialrichtung trennbar sind
und/oder wobei der erste (24) und der zweite (38) Körperabschnitt eine ringförmige Öffnung in die Aufnahmekammer (68) definieren.

4. Steckverbinder nach Anspruch 1, wobei die wenigstens eine Klammer (2) schwenkbar um eine Achse (4), im Wesentlichen senkrecht zu der Längsachse des Buchsenkörpers, befestigt ist.

5. Steckverbinder nach Anspruch 1, wobei die wenigstens eine Klammer (2) eine Länge in Längsrichtung umfasst, die sich zwischen einem ersten (6) und einem zweiten (8) Ende erstreckt, und schwenkbar an einer Position zwischen dem ersten Ende und dem zweiten Ende festgehalten wird.

6. Steckverbinder nach Anspruch 1, wobei das erste Körpereingriffselement (10) und das zweite Körpereingriffselement jeweils einen Zapfen (10) zum Festsetzen in einem Aufnahmeabschnitt in dem ersten Körperabschnitt (24) beziehungsweise dem zweiten Körperabschnitt (38) umfassen.

7. Steckverbinder nach einem der vorhergehenden Ansprüche, der zwei Halteklammern (2) umfasst, wobei die zwei Klammern einander in Radialrichtung gegenüberliegend auf entgegengesetzten Seiten des Buchsenkörperabschnitts bereitgestellt werden.

8. Steckverbinder nach einem der vorhergehenden Ansprüche, wobei die wenigstens eine Halteklammer (2) ein Halteelement (16) umfasst, das dafür angeordnet ist, ein Steckereingriffselement (56) in der Aufnahmekammer (68) festzuhalten.

9. Steckverbinder nach Anspruch 8, wobei das Halteelement eine Haltefläche (18) umfasst, die dafür angeordnet ist, an einem Steckereingriffselement (56) festzusitzen und ein Herausziehen eines Steckereingriffselements (56) aus der Aufnahmekammer (68) zu verhindern, und vorzugsweise wobei
sich die Haltefläche (18) im Wesentlichen in der gleichen Längsachse (4) mit der Achse ausrichtet, um die sich die Klammer (2) dreht,
wobei die wenigstens eine Klammer (2) derart angeordnet ist, dass eine auf die Haltefläche (18) angewendete Kraft in einer Längsachse (4) liegt und diese Längsachse vorteilhafterweise die Achse schneidet, um die sich die Klammer (2) dreht.

10. Steckverbinder nach einem der vorhergehenden Ansprüche, der ferner ein Vorspannmittel (20) umfasst, um die wenigstens eine Klammer (2) zu der geschlossenen Konfiguration vorzuspannen, und/oder
wobei sich das Vorspannmittel (20) zwischen einer ersten und einer zweiten Klammer (2) erstreckt, und/oder
der ferner wenigstens einen Bundabschnitt (42, 46) umfasst, der dafür angeordnet ist, den ersten (24) und den zweiten (38) Körperabschnitt wenigstens teilweise zu umschließen, und/oder
wobei die Halteklammer (2) einen Berührungsabschnitt zum Berühren des Steckereingriffselements (56) umfasst, wobei sich der Berührungsabschnitt nach innen verjüngt, was ermöglicht, dass die wenigstens eine Klammer (2) auf ein Einführen eines Steckereingriffselements (56) durch die Öffnung zu der Aufnahmekammer (68) hin in Radialrichtung nach außen abgelenkt wird.

11. Steckverbinder nach einem der vorhergehenden Ansprüche, der ferner ein Steckereingriffselement (56) umfasst.

12. Steckverbinder nach Anspruch 11, wobei das Steckereingriffselement (56) einen Kopf und einen Körperabschnitt umfasst, die durch eine axiale Rille (62) getrennt werden.

13. Verfahren zum Zusammenbauen eines Steckverbinders, das die folgenden Schritte umfasst:
- Bereitstellen eines ersten Körperabschnitts (24) und eines zweiten Körperabschnitts (38), die dafür konfiguriert sind, zusammen einen Buchsenkörper zu bilden, der eine Aufnahmekammer (68) zur Aufnahme eines Steckereingriffselements (56) definiert, wobei der Buchsenkörper eine Längsachse hat,
- Bereitstellen wenigstens einer Halteklammer (2),
- Positionieren der Halteklammer (2) zwischen dem ersten Körperabschnitt (24) und dem zweiten Körperabschnitt (38), so dass der erste Körperabschnitt (24) und der zweite Körperabschnitt (38) die Halteklammer (2) schwenkbar zwischen denselben festhalten, wobei die wenigstens eine Halteklammer (2) dafür angeordnet ist, ein Steckereingriffselement (56) in der Aufnahmekammer (68) festzuhalten, wobei die wenigstens eine Halteklammer (2) beweglich ist zwischen einer offenen Konfiguration zum Aufnehmen eines Steckereingriffselements (56) und einer geschlossenen Konfiguration zum Einschränken einer Bewegung eines Steckereingriffselements (56) in der Längsachse, **dadurch gekennzeichnet, dass** die wenigstens eine Klammer (2) ein erstes Körpereingriffselement (10) oder eine Aussparung (12) zum drehbaren Anbringen an dem anderen von einer/einem entsprechenden Aussparung oder Körpereingriffselement in dem ersten Körperabschnitt (24), um einer Bewegung in der Längsachse des ersten Körperabschnitts (24) zu widerstehen, und ein zweites Körpereingriffselement oder eine Aussparung zum drehbaren Anbringen an dem anderen von einer/einem entsprechenden Aussparung oder Körpereingriffselement, um einer Bewegung in der Längsachse des zweiten Körperabschnitts (38) zu widerstehen, umfasst, und Positionieren der Halteklammer (2) zwischen dem ersten Körperabschnitt (24) und dem zweiten Körperabschnitt (38) durch Fixieren jeweiliger Aussparungen oder Körpereingriffselemente der Klammer mit jeweiligen anderen von Aussparungen oder Körpereingriffselementen des ersten und des zweiten Körperabschnitts (24, 38).

## Revendications

1. Raccord comprenant :
- un corps femelle présentant un axe longitudinal comprenant une première partie de corps (24) et une seconde partie de corps (38) conçues pour communiquer de façon à définir une chambre de réception (68) destinée à recevoir un organe d'accouplement mâle (56) ;
- au moins un organe élastique de retenue (2) servant à retenir un organe d'accouplement mâle (56) dans la chambre de réception (68), le ou les organes élastiques de retenue (2) étant mobiles entre une configuration ouverte à des fins de réception d'un organe d'accouplement mâle (56) et une configuration fermée à des fins de limitation de mouvement d'un organe d'accouplement mâle (56) sur l'axe longitudinal ;
les première (24) et seconde (38) parties de corps étant conçues pour retenir de manière pivotante le ou les organes élastiques de retenue (2) entre elles, **caractérisé en ce que** le ou les organes élastiques de retenue (2) comprennent un premier élément d'accouplement de corps (10) ou évidement (12) destiné à être installé à rotation sur l'autre parmi un évidement ou un élément d'accouplement de corps dans la première partie de corps (24) correspondant afin de créer une résistance à un mouvement sur l'axe longitudinal de la première partie de corps (24) et un second élément d'accouplement de corps ou évidement destiné à être installé à rotation sur l'autre parmi un évidement ou un élément d'accouplement de corps correspondant afin de créer une résistance à un mouvement sur l'axe longitudinal de la seconde partie de corps (38).

2. Raccord selon la revendication 1, dans lequel le corps femelle est conçu pour recevoir un élément (56) apte à être attiré par un aimant, et de préférence dans lequel le corps femelle comprend un aimant (28) ;
et de préférence dans lequel le corps femelle est en outre conçu et configuré pour retenir l'élément ou l'aimant (28) dans celui-ci ;
et de préférence dans lequel le corps femelle comprend une zone de réception (26) pour l'aimant (28) formée par les première (24) et seconde (38) parties de corps.

3. Raccord selon l'une quelconque des revendications précédentes, dans lequel le ou les organes élastiques de retenue (2) sont conçus pour se déplacer de la configuration fermée à la configuration ouverte lors du transfert de l'organe d'accouplement mâle (56) dans la chambre (68) ; et/ou
dans lequel le ou les organes élastiques de retenue (2) sont au moins partiellement mobiles entre une configuration ouverte radialement vers l'extérieur et une configuration fermée radialement vers l'intérieur ; et/ou dans lequel les première (24) et seconde (38) parties de corps sont séparables radialement ; et/ou
dans lequel les première (24) et seconde (38) parties de corps définissent une ouverture annulaire menant à la chambre de réception (68).

4. Raccord selon la revendication 1, dans lequel le ou les organes élastiques de retenue (2) sont assujettit de manière pivotante autour d'un axe (4) essentiellement perpendiculaire à l'axe longitudinal du corps femelle.

5. Raccord selon la revendication 1, dans lequel le ou les organes élastiques de retenue (2) comprennent une longueur longitudinale s'étendant entre des première (6) et seconde (8) extrémités et sont retenus de manière pivotante au niveau d'un emplacement situé entre la première extrémité et la seconde extrémité.

6. Raccord selon la revendication 1, dans lequel le premier élément d'accouplement de corps (10) et le second élément d'accouplement de corps comprennent chacun un ergot (10) destiné à se placer dans une partie de réception dans la première partie de corps (24), et la seconde partie de corps (38) respectivement.

7. Raccord selon l'une quelconque des revendications précédentes, comprenant deux organes élastiques de retenue (2), les deux organes élastiques de retenue étant disposés de manière radialement opposée l'un vis-à-vis de l'autre sur des côtés opposés de la partie de corps femelle.

8. Raccord selon l'une quelconque des revendications précédentes, dans lequel le ou les organes élastiques de retenue (2) comprennent un élément de retenue (16) conçu pour retenir un organe d'accouplement mâle (56) dans la chambre de réception (68) dans la configuration fermée.

9. Raccord selon la revendication 8, dans lequel l'élément de retenue comprend une surface de retenue (18) conçue pour se placer contre un organe d'accouplement mâle (56) et empêcher un retrait d'un organe d'accouplement mâle (56) à partir de la chambre de réception (68) ; et de préférence dans lequel
la surface de retenue (18) s'aligne essentiellement sur le même axe longitudinal (4) que l'axe autour duquel l'organe élastique de retenue (2) tourne ;
dans lequel le ou les organes élastiques de retenue (2) sont conçus de telle sorte qu'une force appliquée à la surface de retenue (18) se situe sur un axe longitudinal (4) et cet axe longitudinal croise avantageusement l'axe autour duquel l'organe élastique de retenue (2) tourne.

10. Raccord selon l'une quelconque des revendications précédentes, comprenant en outre un moyen de sollicitation (20), servant à solliciter le ou les organes élastiques de retenue (2) vers la configuration fermée ; et/ou
dans lequel le moyen de sollicitation (20) s'étend entre un premier et un second organe élastique de retenue (2) ; et/ou
comprenant en outre au moins une partie formant manchon (42, 46) conçue pour envelopper au moins partiellement les première (24) et seconde (38) parties de corps ; et/ou
dans lequel l'organe élastique de retenue (2) comprend une partie de contact destinée à venir en contact avec l'organe d'accouplement mâle (56), la partie de contact étant inclinée vers l'intérieur de façon à permettre à l'organe ou aux organes élastiques de retenue (2) de fléchir radialement vers l'extérieur lors de l'introduction d'un organe d'accouplement mâle (56) à travers l'ouverture menant à la chambre de réception (68).

11. Raccord selon l'une quelconque des revendications précédentes, comprenant en outre un organe d'accouplement mâle (56).

12. Raccord selon la revendication 11, dans lequel l'organe d'accouplement mâle (56) comprend une tête et une partie formant corps séparées par une rainure axiale (62).

13. Procédé d'assemblage d'un raccord comprenant les étapes suivantes :
- prévoir une première partie de corps (24) et une seconde partie de corps (38) configurées de façon à former conjointement un corps femelle définissant une chambre de réception (68) destinée à recevoir un organe d'accouplement mâle (56), le corps femelle présentant un axe longitudinal ;
- prévoir au moins un organe élastique de retenue (2) ;
- positionner l'organe élastique de retenue (2) entre la première partie de corps (24) et la seconde partie de corps (38) de telle sorte que la première partie de corps (24) et la seconde partie de corps (38) retiennent de manière pivotante l'organe élastique de retenue (2) entre elles, le ou les organes élastiques de retenue (2) étant conçus pour retenir un organe d'accouplement mâle (56) dans la chambre de réception (68), le ou les organes élastiques de retenue (2) étant mobiles entre une configuration ouverte à des fins de réception d'un organe d'accouplement mâle (56) et une configuration fermée à des fins de limitation de mouvement d'un organe d'accouplement mâle (56) sur l'axe longitudinal, **caractérisé en ce que** le ou les organes élastiques de retenue (2) comprennent un premier élément d'accouplement de corps (10) ou évidement (12) destiné à être installé à rotation sur l'autre parmi un évidement ou un élément d'accouplement de corps dans la première partie de corps (24) correspondant afin de créer une résistance à un mouvement sur l'axe longitudinal de la première partie de corps (24) et un second élément d'accouplement de corps ou évidement destiné à être installé à rotation sur l'autre parmi un évidement ou un élément d'accouplement de corps correspondant afin de créer une résistance à un mouvement sur l'axe longitudinal de la seconde partie de corps (38), et positionner l'organe élastique de retenue (2) entre la première partie de corps (24) et la seconde partie de corps (38) en agençant des évidements ou des éléments d'accouplement de corps respectifs de l'organe élastique avec d'autres évidements ou éléments d'accouplement de corps respectifs des première et seconde parties de corps (24, 38).
